(19) Europäisches Patentamt
European Patent Office
Office européen des brevets

(11) **EP 4 635 593 A1**

(12) **EUROPÄISCHE PATENTANMELDUNG**

(43) Veröffentlichungstag:
**22.10.2025 Patentblatt 2025/43**

(21) Anmeldenummer: **25155143.8**

(22) Anmeldetag: **31.01.2025**

(51) Internationale Patentklassifikation (IPC):
**B01D 17/02** (2006.01)   **B01D 21/00** (2006.01)

(52) Gemeinsame Patentklassifikation (CPC):
**B01D 17/0208; B01D 21/0012; E03F 5/14**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **16.04.2024 DE 102024203507**

(71) Anmelder: **Hegler, Ralph-Peter, Dr.-Ing.
97688 Bad Kissingen (DE)**

(72) Erfinder: **Hegler, Ralph-Peter, Dr.-Ing.
97688 Bad Kissingen (DE)**

(74) Vertreter: **Rau, Schneck & Hübner
Patentanwälte Rechtsanwälte PartGmbB
Königstraße 2
90402 Nürnberg (DE)**

(54) **SEDIMENTATIONSROHR UND ROHRSEDIMENTATIONSANLAGE MIT EINEM DERARTIGEN SEDIMENTATIONSROHR**

(57)    Ein Sedimentationsrohr (8) umfasst eine Rohrlängsachse (19), einen von einer Rohrinnenseite (22) begrenzten Rohrinnenraum (23), mindestens ein Führungselement (24), das an der Rohrinnenseite (22) integral ausgebildet ist, und mindestens ein an dem mindestens einen Führungselement (24) gehaltenes Strömungstrennelement (27), das den Rohrinnenraum (22) in einen Strömungsraum (30) und einen Sedimentationsraum (31) trennt, wobei das mindestens eine Strömungstrennelement (27) mindestens eine Durchlassöffnung (32) aufweist zur Fluidverbindung zwischen dem Strömungsraum (30) und dem Sedimentationsraum (31).

Fig.3

EP 4 635 593 A1

**Beschreibung**

Der Inhalt der deutschen Patentanmeldung DE 10 2024 203 507.6 wird durch Bezugnahme hierin aufgenommen.

Die Erfindung betrifft ein Sedimentationsrohr sowie eine Rohrsedimentationsanlage mit einem derartigen Sedimentationsrohr.

DE 10 2004 008 960 A1 offenbart eine Regenwasserbehandlungsanlage mit einem Sedimentationsrohr, bei dem in einem Strömungsraum am Übergang zu einem Sedimentationsraum Trennwände und Querstege angeordnet sind, um eine Sedimentation von Schmutzfrachtanteilen im Regenwasser zu ermöglichen. Die Herstellung des Sedimentationsrohrs, insbesondere die Befestigung der Trennwände und/oder der Querstege im Rohrinnenraum ist aufwändig und kompliziert.

Der Erfindung liegt die Aufgabe zugrunde, die Herstellung eines Sedimentationsrohrs zu vereinfachen und insbesondere ein derartiges Sedimentationsrohr und eine damit ausgestattete Rohrsedimentationsanlage zu wirtschaftlich günstigen Bedingungen zu ermöglichen.

Diese Aufgabe ist durch ein Sedimentationsrohr mit den im Anspruch 1 angegebenen Merkmalen sowie durch eine Rohrsedimentationsanlage mit den im Anspruch 8 angegebenen Merkmalen gelöst.

Erfindungsgemäß wurde erkannt, dass in einem Sedimentationsrohr ein Strömungsraum von einem Sedimentationsraum mittels eines Strömungstrennelements vorteilhaft trennbar ist, indem das mindestens eine Strömungstrennelement an mindestens einem Führungselement gehalten ist. Insbesondere ist der Strömungsraum in dem Rohrinnenraum vertikal oberhalb des Strömungstrennelements angeordnet. Entsprechend ist der Sedimentationsraum vertikal unterhalb des Strömungstrennelements angeordnet.

Das mindestens eine Führungselement ist an einer Rohrinnenseite des Sedimentationsrohrs integral ausgebildet. Das mindestens eine Führungselement ist insbesondere einteilig an der Rohrinnenseite angeformt und insbesondere in Extrusionsverfahren hergestellt. Insbesondere ist das mindestens eine Führungselement parallel zur Rohrlängsachse des Sedimentationsrohrs orientiert, also axial ausgerichtet. Die Rohrinnenseite ist mit Ausnahme des mindestens einen Führungselements insbesondere zylindrisch ausgeführt.

Das mindestens eine Führungselement erstreckt sich entlang einer Führungselementlänge, die insbesondere identisch ist mit einer Rohrlänge des Sedimentationsrohrs. Insbesondere ist das Führungselement axial durchgängig ausgeführt.

Es ist möglich, ein Sedimentationsrohr axial mit einem weiteren Rohr zu koppeln, wobei dieses weitere Rohr ohne Führungselement ausgeführt ist. Die so gekoppelten Rohre weisen eine Gesamt-Rohrlänge auf, wobei in diesem Fall die Führungselementlänge kleiner ist als die Gesamt-Rohrlänge. Vorteilhaft ist es, wenn die Führungselementlänge mindestens 50 % der Gesamt-Rohrlänge, insbesondere mindestens 60 %, insbesondere mindestens 70 %, insbesondere mindestens 80 %, insbesondere mindestens 90 %, insbesondere mindestens 95 % und insbesondere mindestens 98 % der Gesamt-Rohrlänge beträgt. Insbesondere durch Kopplung geeigneter Rohre oder Rohrabschnitte an einem stirnseitigen Zulauf und/oder Ablauf des Sedimentationsrohrs kann die Rohrinnenseite führungselementfrei ausgeführt sein.

Das mindestens eine Strömungstrennelement ist in Umfangsrichtung bezüglich der Rohrlängsachse zwischen dem mindestens einen Führungselement und der Rohrinnenseite gehalten. Insbesondere liegt das mindestens eine Strömungstrennelement mit seiner Unterseite an der Rohrinnenseite auf. An seiner Oberseite ist das mindestens eine Strömungstrennelement durch das mindestens eine Führungselement, insbesondere gegen Abheben gehalten. Es ist auch denkbar, dass zwei Führungselemente vorhanden sind, die ein Strömungstrennelement an seiner Oberseite und seiner Unterseite halten.

Das mindestens eine Führungselement sowie die diesbezügliche Rohrinnenseite definieren einen Aufnahmeschacht, in den das mindestens eine Strömungstrennelement axial einschiebbar ist. Insbesondere ist das mindestens eine Strömungstrennelement lösbar im Rohrinnenraum gehalten. Der Aufnahmeschacht ist in vertikaler Richtung nach oben insbesondere durch das mindestens eine Führungselement begrenzt. Seitlich ist der Aufnahmeschacht durch die Rohrinnenseite begrenzt. Vertikal nach unten ist der Aufnahmeschacht durch die Rohrinnenseite und/oder ein weiteres Führungselement begrenzt.

Das mindestens eine Strömungstrennelement ist im Wesentlichen plattenartig oder rahmenartig ausgeführt. Das mindestens eine Strömungstrennelement ist insbesondere in der Art eines Gitterrosts ausgeführt. Das mindestens eine Strömungstrennelement ist insbesondere als Flächenelement ausgeführt. Flächenelement bedeutet, dass das Strömungstrennelement eine Längserstreckung, die parallel zur Axialerstreckung des Führungselements orientiert ist, und eine Breitenerstreckung aufweist, die senkrecht zur Längserstreckung orientiert ist und insbesondere in einer zur Rohrlängsachse senkrecht orientierten Normalebene angeordnet ist. Die Längserstreckung und die Breitenerstreckung des Führungselements sind größer und insbesondere deutlich größer als eine Dickenerstreckung, die senkrecht zur Längserstreckung und senkrecht zur Breitenerstreckung orientiert ist.

Das mindestens eine Strömungstrennelement weist mindestens eine Durchlassöffnung und insbesondere mehrere Durchlassöffnungen auf, die sich entlang der Dickenrichtung des Strömungstrennelements erstrecken. Die mindestens eine Durchlassöffnung ist an dem Strömungstrennelement innenliegend angeordnet. Die mindestens eine Durchlassöffnung weist eine geschlossene Kontur auf.

Das mindestens eine Strömungstrennelement weist insbesondere zwei Seitenleisten auf, die das mindestens eine Strömungstrennelement seitlich begrenzen. Mit den Seitenleisten kann das Strömungstrennelement an dem mindestens einen Führungselement, insbesondere in dem Aufnahmeschacht, angeordnet werden. Insbesondere sind die Seitenleisten unterbrechungsfrei ausgeführt. Insbesondere sind die Seitenleisten frei von Durchlassöffnungen. Eine zuverlässige und mechanisch robuste Anordnung des mindestens einen Strömungstrennelements an dem mindestens einen Führungselement ist sichergestellt. An den Seitenleisten weist das mindestens eine Strömungstrennelement eine Außenkontur auf, die mit der Innenkontur des Aufnahmeschachts korrespondiert.

Mehrere Durchlassöffnungen sind insbesondere regelmäßig und insbesondere rasterartig, insbesondere in der Form eines Rechteckrasters, an dem

Strömungstrennelement angeordnet. Benachbarte Durchlassöffnungen sind jeweils durch einen, insbesondere linear orientierten, Trennsteg voneinander getrennt. Die Trennstege sind insbesondere in Längsrichtung und in Breitenrichtung des Strömungstrennelements orientiert. Die Trennstege können auch quer zur Längsrichtung und/oder zur Breitenrichtung orientiert sein. Es ist auch denkbar, dass die Trennstege nicht geradlinig, insbesondere gekrümmt, ausgeführt sind.

Die Durchlassöffnungen können identisch oder unterschiedlich ausgeführt sein, also insbesondere identische oder unterschiedliche Konturen aufweisen. Jede einzelne Durchlassöffnung weist eine Durchströmfläche auf. Die Durchströmfläche ist definiert durch eine minimale Querschnittsfläche der Durchlassöffnung in einer Richtung senkrecht zur Dickenrichtung. Die Summe aller Durchströmflächen ergibt eine rechnerische Gesamtdurchströmfläche. Die Gesamtdurchströmfläche des Strömungstrennelements beträgt mindestens 20 %, insbesondere mindestens 30 %, insbesondere mindestens 40 %, insbesondere mindestens 50 %, insbesondere mindestens 60 %, insbesondere mindestens 70 %, insbesondere mindestens 80 %, insbesondere mindestens 90 % und insbesondere höchstens 95 % der Fläche des Strömungstrennelements, die durch dessen Außenkontur in einer Ebene senkrecht zur Dickenrichtung definiert ist. Insbesondere ist die Außenkontur rechteckig und wird durch die Längsrichtung und die Breitenrichtung vorgegeben. Die Strömungstrennelemente weisen jeweils in Längsrichtung eine axiale Länge in einem Bereich von 400 mm bis 600 mm, insbesondere zwischen 450 mm und 550 mm und insbesondere von etwa 500 mm auf.

Es ist insbesondere auch möglich, mehrere Strömungstrennelemente in dem Sedimentationsrohr vertikal beabstandet zueinander anzuordnen.

Das mindestens eine Strömungstrennelement ist insbesondere aus Kunststoff hergestellt. Das mindestens eine Strömungstrennelement kann insbesondere durch ein Spritzgießverfahren oder durch additive Fertigung hergestellt werden. Insbesondere ist das Strömungstrennelement aus Polyethylen (PE), Polypropylen (PP) und/oder aus Polyvinylchlorid (PVC) hergestellt. Für die Herstellung kommen auch andere polymere Werkstoffe in Betracht, die insbesondere Füllstoffe und/oder Verstärkungsstoffe, insbesondere Talkumplättchen und/oder Glasfasern, aufweisen können.

Das Sedimentationsrohr ist insbesondere aus Kunststoff hergestellt, insbesondere aus PE, PP und/oder PVC, insbesondere durch Extrusion.

Ein Sedimentationsrohr gemäß Anspruch 2 ist unkompliziert ausgeführt. Die Wandstärke des Kunststoffrohrs ist durch das mindestens eine Führungselement nicht reduziert. Das Sedimentationsrohr ist mechanisch robust.

Alternativ kann das mindestens eine Führungselement als Nut ausgeführt sein, insbesondere als Innennut an der Rohrinnenseite. Die Innennut kann unmittelbar den Aufnahmeschacht bilden. Die Aufnahme des Strömungstrennelements ist unmittelbar möglich. Die Seitenleisten des Strömungstrennelements können entsprechend der Außennut ausgeführt sein.

Zwei Führungselemente gemäß Anspruch 3 gewährleisten eine stabile und zuverlässige Aufnahme des mindestens einen Strömungselements. Insbesondere sind die Führungselemente derart gegenüberliegend angeordnet, dass das mindestens eine Strömungstrennelement an beiden Führungselementen gleichzeitig gehalten ist. Dadurch wird eine stabile Auflage für das mindestens eine Strömungstrennelement gebildet. Insbesondere sind die Führungselemente derart an der Rohrinnenseite angeordnet, dass die dadurch gebildeten Aufnahmeschächte einander zugewandt angeordnet sind.

Eine Trennebene gemäß Anspruch 4 ermöglicht eine vorteilhafte Anordnung des Strömungstrennelements in dem Rohrinnenraum. Es ist auch möglich, dass mehrere, insbesondere vertikal beabstandet zueinander angeordnete, Trennebenen definiert werden. Insbesondere ist der Sedimentationsraum der vertikal untenliegende Raum des Rohrinnenraums. Wenn mehrere Trennebenen vorhanden sind, sind mehrere Strömungsräume oberhalb des Sedimentationsraums und insbesondere übereinander angeordnet. Insbesondere ist die Trennebene parallel zur Rohrlängsachse orientiert. Das bedeutet, dass die Strömungsquerschnittsfläche senkrecht zur Rohrlängsachse für den Führungsraum und den Sedimentationsraum entlang der Rohrlängsachse konstant ist. Bei einer Neigung der Trennebene gegenüber der Rohrlängsachse kann eine Vergrößerung oder Verkleinerung des Strömungsraums bzw. Sedimentationsraums erreicht werden. Insbesondere ist die Trennebene exzentrisch bezüglich der Rohrlängsachse angeordnet, insbesondere vertikal unterhalb der Rohrlängsachse und insbesondere sohlennah ausgeführt. Insbesondere beträgt der vertikale Abstand der Trennebene von der Sohle des Sedimentationsrohrs, also vom untersten Punkt des Rohrinnenraums, höchstens 50 % des Innenradius des Sedimentationsrohrs, insbesondere höchstens 40 %, insbesondere höchstens 30 %, insbesondere höchstens 20 %, insbesondere höchstens 15 %, insbesondere höchstens 10 % und insbesondere höchstens 5 %.

Mindestens ein Strömungshinderniselement gemäß Anspruch 5 ermöglicht eine vorteilhafte Zurückhaltung von Schwebstoffen im Wasser. Das mindestens eine Strömungshinderniselement stellt einen Fließwiderstand dar, der insbesondere Rückströmungen verursacht, wodurch eine zusätzliche Reinigung des Wassers erfolgt. Das mindestens eine Strömungshinderniselement ist lamellenartig ausgeführt und insbesondere einteilig an dem Strömungshinderniselement angeformt. Die Lamelle ist insbesondere derart an dem Strömungshinderniselement angeordnet, dass sie sich entlang der Breitenrichtung des Strömungstrennelements erstreckt. Insbesondere erstreckt sich das Strömungshinderniselement über die gesamte Breite des Rohrinnenraums. Insbesondere liegt das Strömungshinderniselement beidseitig, insbesondere mit den beiden gegenüberliegenden Stirnseiten, an der Rohrinnenseite an. Das Strömungshinderniselement kann auch quer zur Breitenrichtung zumindest anteilig orientiert sein, insbesondere diagonal. Das Strömungshinderniselement ist an einer dem Sedimentationsraum zugewandten Unterseite des Strömungstrennelement angeordnet. Wenn das Strömungstrennelement in dem Sedimentationsrohr eingesetzt ist, ragt das Strömungshinderniselement in den Sedimentationsraum hinein.

Eine Ausführung des mindestens einen Strömungshinderniselements gemäß Anspruch 6 bewirkt eine zusätzlich vorteilhafte Reinigung des Wassers. Die Rückströmungen sind verbessert.

Ein Sedimentationsrohr gemäß Anspruch 7 ist besonders robust ausgeführt. Erhebungen an einer Rohraußenseite bewirken eine zusätzliche Stabilität. Alternativ kann das Sedimentationsrohr als Vollwandrohr ausgeführt sein.

Insbesondere ist das Sedimentationsrohr als Verbundrohr ausgeführt mit Innenrohr und einem damit verschweißten Außenrohr. Es wurde insbesondere gefunden, dass ein Verhältnis von Außendurchmesser des Außenrohrs zu Innendurchmesser des Innenrohrs materialabhängig ist. Für PVC beträgt das Verhältnis mindestens 1,08, für PP mindestens 1,13 und für PE mindestens 1,15.

Alternativ kann das Sedimentationsrohr auch als Rippenrohr ausgeführt sein.

Eine Rohrsedimentationsanlage gemäß Anspruch 8 weist im Wesentlichen die Vorteile des Sedimentationsrohrs selbst auf, worauf hiermit verwiesen wird. Eine Sedimentationsstrecke, die einen Zulaufschacht mit einem Ablaufschacht verbindet, weist mindestens ein Sedimentationsrohr auf.

Eine Rohrsedimentationsanlage gemäß Anspruch 9 ermöglicht eine vorteilhafte Reinigung von Schwebstoffen. Ein Steigungswinkel beträgt insbesondere zwischen 2° und 5°. Das Sedimentationsrohr ist mit einer Steigung gegenüber der Horizontalen von dem Zulaufschacht zu dem Ablaufschacht angeordnet.

Ein Zulaufschacht gemäß Anspruch 10 ermöglicht eine vorteilhafte Abscheidung von Schmutz, insbesondere in Form von Sand und/oder Schlamm.

Ein Stauelement gemäß Anspruch 11 ermöglicht, dass nur eine begrenzte, insbesondere vorgereinigte, Wassermenge aus der Rohrsedimentationsanlage, insbesondere aus dem Ablaufschacht, austreten kann, um in eine insbesondere an die Rohrsedimentationsanlage angeschlossene Versickerungsanlage, eine Regenrückhalteanlage und/oder eine Vorflut zu strömen. Das Stauelement ist insbesondere als Stauwand, insbesondere vollflächig, ausgeführt. Insbesondere stellt die Stauwand ein unmittelbares Strömungshindernis zwischen einer Ablaufschachtzuströmöffnung und einer Ablaufschachtabströmöffnung dar.

Weitere Merkmale, Vorteile und Einzelheiten der Erfindung ergeben sich aus der nachfolgenden Beschreibung von Ausführungsbeispielen anhand der Zeichnung. Es zeigen:

Fig. 1 eine Längsschnittdarstellung einer Rohrsedimentationsanlage mit einem erfindungsgemäßen Sedimentationsrohr mit Strömungstrennelementen in einer sohlennah angeordneten Trennebene,

Fig. 2 eine vergrößerte Detailansicht des Sedimentationsrohrs gemäß Fig. 1,

Fig. 3 eine Schnittdarstellung gemäß Schnittlinie III-III in Fig. 2,

Fig. 4 eine perspektivische Ansicht eines Strömungstrennelements gemäß Fig. 1,

Fig. 5 eine Fig. 2 entsprechende Darstellung eines Sedimentationsrohrs gemäß einem weiteren Ausführungsbeispiel, bei dem die Trennebene die Rohrlängsachse enthält,

Fig. 6 eine Schnittdarstellung gemäß Schnittlinie VI-VI in Fig. 5,

Fig. 7 eine Fig. 1 entsprechende Darstellung mit einem Sedimentationsrohr gemäß einem weiteren Ausführungsbeispiel, das Strömungstrennelemente in mehreren Trennebenen umfasst,

Fig. 8 eine Fig. 1 entsprechende Darstellung mit einem Sedimentationsrohr gemäß einem weiteren Ausführungsbeispiel, bei dem das Strömungstrennelement mehrere Strömungshinderniselemente aufweist,

Fig. 9     eine vergrößerte Detailansicht des Sedimentationsrohrs gemäß Fig. 8,

Fig. 10     eine Schnittdarstellung gemäß Schnittlinie X-X in Fig. 9,

Fig. 11     eine Fig. 4 entsprechende perspektivische Ansicht des Strömungstrennelements gemäß Fig. 8,

Fig. 12     eine Fig. 1 entsprechende Darstellung mit einem Sedimentationsrohr gemäß einem weiteren Ausführungsbeispiel, bei dem die Strömungshinderniselemente gekrümmt ausgeführt sind,

Fig. 13     eine vergrößerte Detailansicht des Sedimentationsrohrs gemäß Fig. 12,

Fig. 14     eine Schnittdarstellung gemäß Schnittlinie XIV-XIV in Fig. 13,

Fig. 15     eine Fig. 4 entsprechende perspektivische Ansicht des Strömungstrennelements gemäß Fig. 12,

Fig. 16     eine Fig. 13 entsprechende Darstellung eines Sedimentationsrohrs gemäß einem weiteren Ausführungsbeispiel mit zusätzlichen Haltestegen zum Halten des Strömungstrennelements an den Führungselementen,

Fig. 17     eine Schnittdarstellung gemäß Schnittlinie XVII-XVII in Fig. 16.

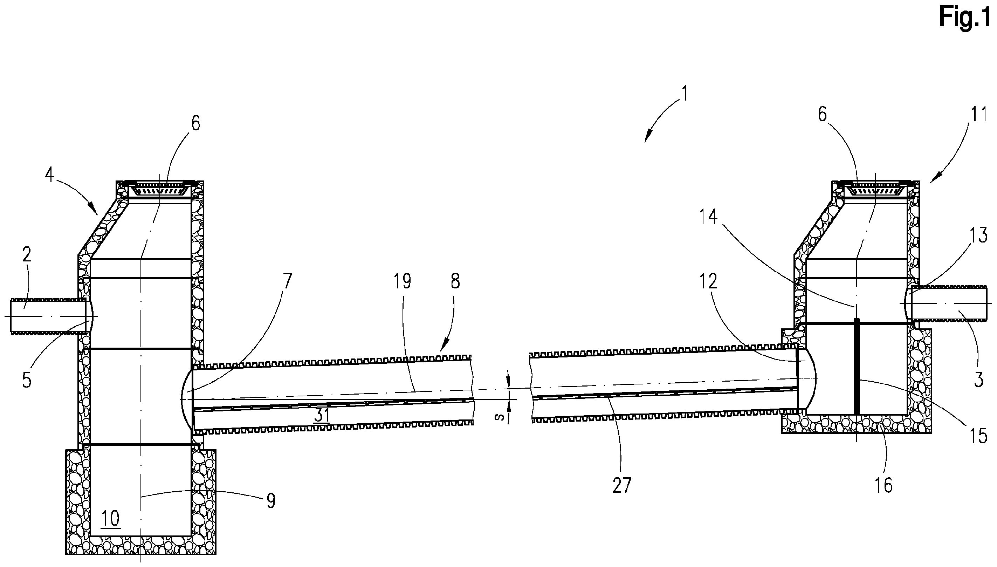

Eine in Fig. 1 insgesamt mit 1 gekennzeichnete Rohrsedimentationsanlage dient zum Reinigen eines flüssigen Mediums, insbesondere von Regenwasser. Zu diesem Zweck ist die Rohrsedimentationsanlage 1 mittels einer Zulaufleitung 2 an eine nicht dargestellte Mediumquelle, insbesondere einen Regenwasserzulauf, angeschlossen. Das mittels der Rohrsedimentationsanlage 1 gereinigte Medium wird mittels einer Ablaufleitung 3 an ein nachgelagertes Funktionsbauwerk abgeleitet, insbesondere zur Regenwasserversickerung und/oder Regenwasserrückhaltung, insbesondere an eine Versickerungsanlage, an eine Regenrückhalteanlage und/oder an eine Vorflut.

Die Rohrsedimentationsanlage 1 umfasst einen Zulaufschacht 4, in den die Zulaufleitung 2 an einer Zulaufschachtzuführöffnung 5 mündet. Der Zulaufschacht 4 ist insbesondere als Betonschacht ausgeführt. Andere Werkstoffe zur Herstellung des Zulaufschachts 4 sind möglich.

An seiner Oberseite weist der Zulaufschacht 4 eine an sich bekannte Schachtabdeckung 6 auf. Der Zulaufschacht 4 ist insbesondere hohlzylindrisch ausgeführt, wobei sich seine Querschnittfläche in einem oberen, der Schachtabdeckung 6 zugewandten Bereich verjüngt.

An den Zulaufschacht 4 ist an einer Zulaufschachtabführöffnung 7 ein Sedimentationsrohr 8 angeschlossen. In Vertikalrichtung ist die Zulaufschachtabführöffnung 7 unterhalb der Zulaufschachtzuführöffnung 5 angeordnet. Insbesondere sind die Zulaufschachtzuführöffnung 5 und die Zulaufschachtabführöffnung 7 an separaten Schachtelementen ausgebildet, durch die der Zulaufschacht 4 in an sich bekannter Weise gebildet ist. Bezüglich einer Schachtmittelachse 9 sind die Zulaufschachtzuführöffnung 5 und die Zulaufschachtabführöffnung 7 diametral gegenüberliegend an dem Zulaufschacht 4 angeordnet.

Vertikal unterhalb der Zulaufschachtabführöffnung 7 weist der Zulaufschacht 4 einen Schmutzfang 10 auf, der zur Aufnahme von großen und/oder groben Verunreinigungen dient, die sich beim Einströmen des Mediums in den Zulaufschacht 4 absetzen können, insbesondere bevor das Medium in das Sedimentationsrohr 8 strömt.

Das Sedimentationsrohr 8 ist an einem dem Zulaufschacht 4 abgewandten Ende an einem Ablaufschacht 11 angeschlossen. Das Sedimentationsrohr 8 ist an einer Ablaufschachtzuführöffnung 12 des Ablaufschachts 11 angeordnet. Der Ablaufschacht 11 ist als Betonschacht ausgeführt und weist an seiner Oberseite eine entsprechende Schachtabdeckung 6 auf.

Die Ablaufleitung 3 ist an eine Ablaufschachtabführöffnung 13 angeschlossen, die in vertikaler Richtung bezüglich der Schachtmittelachse 14 vertikal oberhalb der Ablaufschachtzuführöffnung 12 angeordnet ist.

In dem Ablaufschacht 11 ist ein Stauelement 15 angeordnet. Das Stauelement 15 ist insbesondere als durchgängige Stauwand ausgeführt. Das Stauelement 15 ist am Boden 16 des Ablaufschachts 11 angeordnet und erstreckt sich entlang der Schachtmittelachse 14. Das Stauelement 15 ist insbesondere entlang einer direkten Verbindungslinie von der Ablaufschachtzuführöffnung 12 zu der Ablaufschachtabführöffnung 13 angeordnet. Das Stauelement 15 dient zum Zurückhalten von Medium, das durch das Sedimentationsrohr 8 in den Ablaufschacht 11 gelangt.

Das Sedimentationsrohr 8 verbindet den Zulaufschacht 4 mit dem Ablaufschacht 11. Gemäß Fig. 1 ist zur Verbindung des Zulaufschachts 4 mit dem Ablaufschacht 11 ein einziges Sedimentationsrohr 8 vorhanden. Es ist insbesondere denkbar, mehrere Sedimentationsrohre 8 hintereinander anzuordnen und miteinander zu koppeln, um eine Sedimentationsstrecke mit ausreichender Länge auszuführen. Die Länge der Sedimentationsstrecke, die auch als Anlagenlänge bezeichnet wird, beträgt insbesondere mindestens 4,0 m.

Das Sedimentationsrohr 8 ist mit seiner Rohrlängsachse 19 gegenüber der Horizontalen mit einem Steigungswinkel s geneigt orientiert. Der Steigungswinkel s beträgt insbesondere zwischen 2° und 5°. Der Steigungswinkel s ist positiv. Die Ablaufschachtzuführöffnung 12 ist vertikal oberhalb der Zulaufschachtabführöffnung 7 angeordnet.

Das Sedimentationsrohr 8 ist als Kunststoffrohr und insbesondere als Verbundrohr ausgeführt. Es ist alternativ denkbar, dass das Sedimentationsrohr 8 als Rippenrohr oder als Vollwandrohr ausgeführt ist.

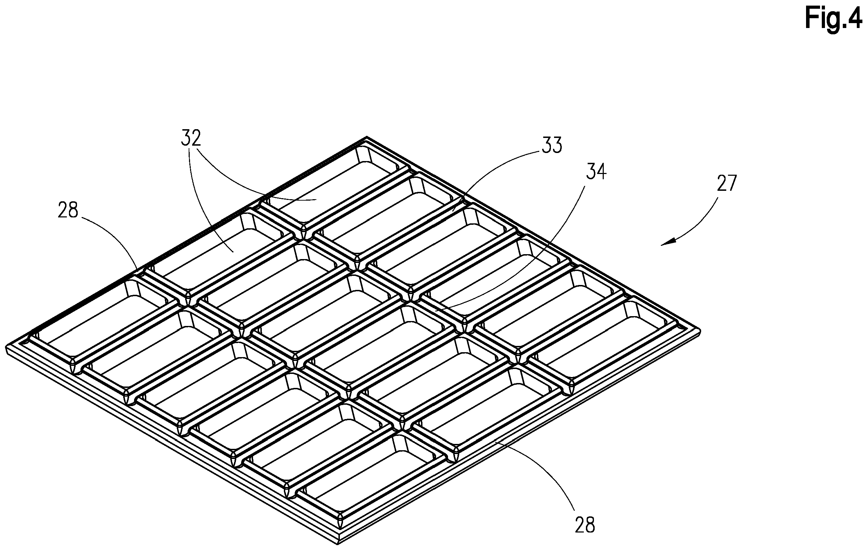

Nachfolgend wird das Sedimentationsrohr 8 anhand von Fig. 1 bis Fig. 4 näher erläutert.

Das als Verbundrohr ausgeführte Sedimentationsrohr 8 umfasst ein Innenrohr 17, das einen Innendurchmesser $d_i$ aufweist. Das Verbundrohr weist außerdem ein Außenrohr 18 mit mehreren senkrecht zur Rohrlängsachse 19 senkrecht orientierten Erhebungen 20 auf. Das Außenrohr 18 weist einen Außendurchmesser $d_a$ auf, der insbesondere durch die Erhebungen 20 definiert ist. Das Verbundrohr kann aus PE hergestellt sein. In diesem Fall beträgt der Außendurchmesser $d_a$ mindestens das 1,15-fache des Innendurchmessers $d_i$. Der Innendurchmesser di beträgt insbesondere mindestens 500 mm, insbesondere mindestens 700 mm, insbesondere mindestens 800 mm, insbesondere mindestens 900 mm und insbesondere mindestens 1.000 mm.

Zwischen zwei axial benachbarten Erhebungen 20 ist jeweils ein Wellental 21 ausgebildet, an dem das Außenrohr 18 mit dem Innenrohr 17 verschweißt ist.

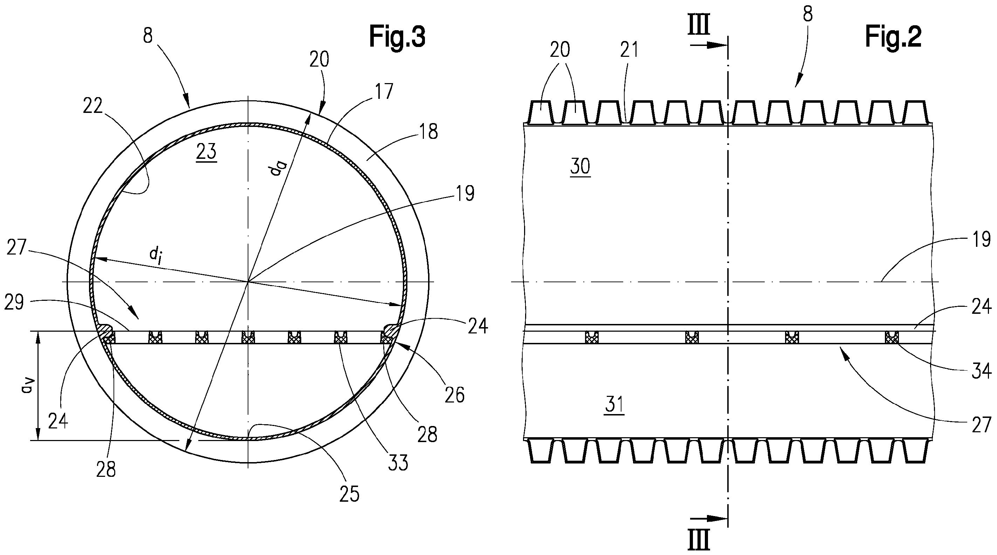

Das Innenrohr 17 definiert eine Rohrinnenseite 22, die einen Rohrinnenraum 23 begrenzt. Der Rohrinnenraum 23 ist im Wesentlichen zylindrisch ausgeführt mit Ausnahme von zwei Führungselementen 24. Die Führungselemente 24 sind jeweils als Steg, insbesondere identisch, ausgeführt und an der Rohrinnenseite 22 integral ausgebildet. Die Führungselemente 24 erstrecken sich parallel zur Rohrlängsachse 19 in axialer Richtung. Gemäß dem gezeigten Ausführungsbeispiel sind die Führungselemente 24 durchgängig ausgeführt, weisen also eine Führungselementlänge auf, die identisch ist zu einer Rohrlänge des Sedimentationsrohrs 8. Bezüglich einer vertikalen, die Rohrlängsachse 9 enthaltenen Ebene, die der Zeichenebene gemäß Fig. 2 entspricht, sind die Führungselemente 24 diametral gegenüberliegend angeordnet. Das Sedimentationsrohr 8 ist spiegelsymmetrisch zu dieser Vertikalebene ausgeführt.

Bezüglich der Herstellung eines derartigen Verbundrohres, insbesondere mit mindestens einem integral ausgebildeten Führungselement 24 an der Rohrinnenseite 22 wird auf die europäische Patentanmeldung 23 163 153.2 verwiesen.

Für die Verbindung von zwei hintereinander angeordneten Sedimentationsrohren 8 dient eine Muffe. Bezüglich Aufbau und Funktion der Muffe wird insbesondere auf die deutsche Patentanmeldung 10 2023 202 512.4 verwiesen. Mit einer darin offenbarten Muffe ist eine Kopplung von Sedimentationsrohren in einer definierten Drehposition bezüglich der Rohrlängsachse 19 vereinfacht.

Die Führungselemente 24 sind gemäß dem gezeigten Ausführungsbeispiel in vertikaler Richtung unterhalb der Rohrlängsachse 19 angeordnet. Die Führungselemente 24 sind mit einem Vertikalabstand av der Sohle 25 des Sedimentationsrohrs 8 angeordnet. Gemäß dem gezeigten Ausführungsbeispiel beträgt der Vertikalabstand av etwa 0,6 x n, wobei $r_i$ dem Innenradius des Innenrohrs 17 entspricht, also dem halben Innendurchmesser $d_i$.

Durch das Führungselement 24 wird an der Rohrinnenseite 22 ein Aufnahmeschacht 26 gebildet. Der Aufnahmeschacht 26 ist vertikal nach oben durch das Führungselement 24 und vertikal nach unten durch die Rohrinnenseite 22 begrenzt, die sich zur Sohle 25 hin erstreckt. Radial nach außen ist der Aufnahmeschacht 26 ebenfalls durch die Rohrinnenseite 22 begrenzt.

An den Führungselementen 24 sind mehrere Strömungstrennelemente 27 gehalten. Die Strömungstrennelemente 27 sind mit Seitenleisten 28 in dem jeweiligen Aufnahmeschacht 26 angeordnet. Die Strömungstrennelemente 27 können in axialer Richtung in den Rohrinnenraum 23 des Sedimentationsrohrs 8 eingeschoben werden, in dem die Seitenleisten 28 in den jeweiligen Aufnahmeschacht 26 geführt werden. Die Strömungstrennelemente 27 sind zuverlässig an der Rohrinnenseite 22 gehalten. Die Strömungstrennelemente 27 sind lösbar an dem Sedimentationsrohr 8 gehalten. Es ist insbesondere möglich, unterschiedliche Strömungstrennelemente 27 in das Sedimentationsrohr 8 einzusetzen. Insbesondere ist es auch möglich, Strömungstrennelemente 27 zu einem späteren Zeitpunkt nachzurüsten und/oder auszutauschen.

Entlang der Rohrlängsachse 19 sind gemäß dem gezeigten Ausführungsbeispiel mehrere Strömungstrennelemente 27 hintereinander angeordnet. Die Strömungstrennelemente 27 definieren eine Trennebene 29, die mit dem vertikalen Abstand av gegenüber der Sohle 25 angeordnet ist. Die Trennebene 29 ist parallel zur Rohrlängsachse 19 orientiert.

Die Strömungstrennelemente 27 trennen den Rohrinnenraum 23 in einen Strömungsraum 30 und einen Sedimentationsraum 31. Der Strömungsraum 30 ist oberhalb der Strömungstrennelemente 27 angeordnet. Entsprechend ist der Sedimentationsraum 31 unterhalb der Strömungstrennelemente 27 angeordnet.

Die Strömungstrennelemente 27 sind insbesondere jeweils identisch ausgeführt. Die Strömungstrennelemente 27 sind gitterrostartig ausgeführt und weisen jeweils achtzehn rechteckförmige Durchlassöffnungen 32 auf, die in einem 6 x 3-Rechteckraster angeordnet sind. Die einzelnen Durchlassöffnungen 32 sind durch Trennstege 33, 34 voneinander getrennt. Aufgrund der Rechteckraster-Ausführung des Strömungstrennelements 27 sind erste Trennstege 33 parallel zur Rohrlängsachse 19 und zweite Trennstege 34 senkrecht zur Rohrlängsachse 19 orientiert. Es versteht sich, dass auch anders orientierte Trennstege, insbesondere auch gekrümmte Trennstege, möglich sind.

Nachfolgend wird anhand von Fig. 1 bis 4 die Funktion der Rohrsedimentationsanlage 1 mit dem Sedimentationsrohr 8 erläutert.

Die Rohrsedimentationsanlage 1 wird mit flüssigem Medium, insbesondere Regenwasser, beaufschlagt, wobei der Füllstand insbesondere derart ist, dass insbesondere die Zulaufschachtzuführöffnung 5 und insbesondere die Ablaufschachtabführöffnung 13 vollständig unter Wasser sind. Verschmutztes Wasser strömt über die Zulaufleitung 2 in den Zulaufschacht 4 ein, wobei starke Verunreinigungen unmittelbar in den Schmutzfang 10 absinken können. Das Wasser, das verschiedene Schwebstoffe aufweisen kann, gelangt in die das Sedimentationsrohr 8 aufweisende Sedimentationsstrecke. Die Wasserströmung wird durch die Strömungstrennelemente 27 beruhigt, so dass die Schwebstoffe durch die Durchlassöffnungen 32 aus dem Strömungsraum 30 in den Sedimentationsraum 31 nach unten absinken und sich dort absetzen können. Da das Sedimentationsrohr 8 mit einem Steigungswinkel s angeordnet ist, findet eine Rückströmung in dem Sedimentationsrohr 8, insbesondere in dem Sedimentationsraum 31, in Richtung des Zulaufschachts 4 statt. Diese Rückströmung kann abgesetzte Schwebstoffe aus dem Sedimentationsraum 31 mitnehmen und in den Schmutzfang 10 fördern.

Ein Spülen der Rohrsedimentationsanlage 1, insbesondere des Sedimentationsrohrs 8 erfolgt vorteilhafterweise ausgehend von dem Ablaufschacht 11. Insbesondere können die Strömungstrennelemente 27 und insbesondere an der Sohle 25 anhaftende Schwebstoffrückstände ausgespült werden.

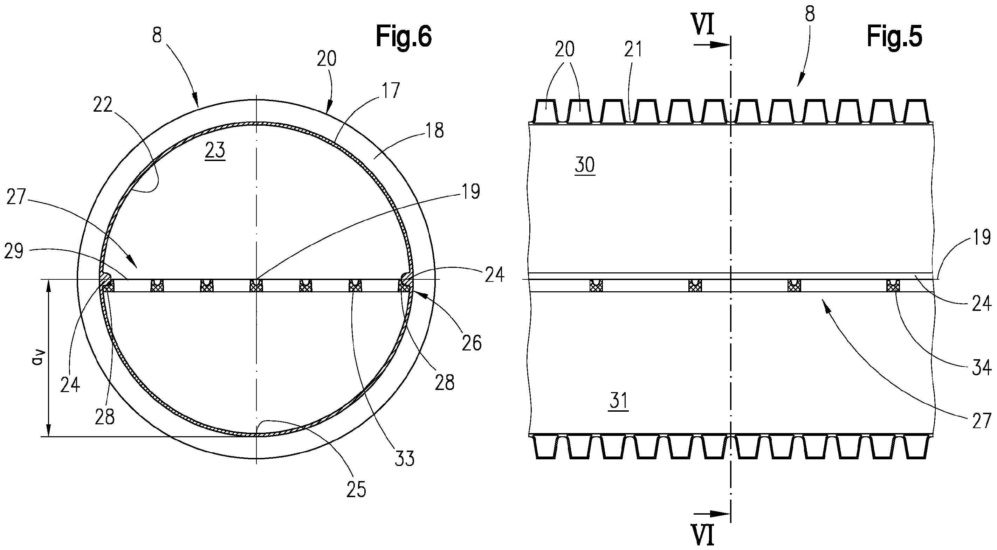

Das in Fig. 5 und 6 gezeigte Ausführungsbeispiel eines Sedimentationsrohrs 8 unterscheidet sich von dem vorherigen Beispiel bezüglich der Position der Führungselemente 24 an der Rohrinnenseite 22. Die Führungselemente 24 sind bezüglich der Rohrlängsachse 19 diametral gegenüberliegend angeordnet. Entsprechend resultiert daraus ein geometrisch abweichender Aufnahmeschacht 26, so dass die Strömungstrennelemente 27 entsprechend angepasste Seitenleisten 28 aufweisen.

Bei dem gezeigten Ausführungsbeispiel sind der Strömungsraum 30 und der Sedimentationsraum 31 im Wesentlichen gleich groß.

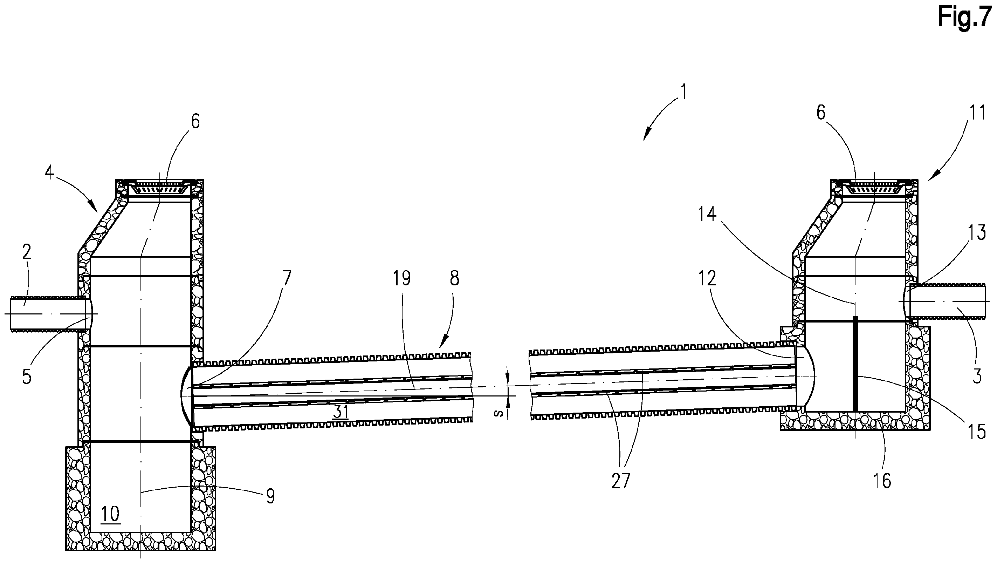

Bei dem in Fig. 7 gezeigten Ausführungsbeispiel weist das Sedimentationsrohr 8 zwei vertikal zueinander beabstandet angeordnete Trennebenen 29 auf. In dem Sedimentationsrohr 8 sind die Strömungstrennelemente 27 mehrlagig, insbesondere zweilagig, zueinander angeordnet. Dadurch kann eine zusätzliche Beruhigung der Strömung erreicht werden. Der vertikale Abstand zwischen der unteren Trennebene 29 und der Sohle 25 bzw. zwischen den beiden Trennebenen 29 kann entsprechend den Bedingungen individuell festgelegt werden. Es versteht sich, dass auch mehr als zwei Trennebenen 29 ausgeführt sein können. Es ist insbesondere denkbar, dass die Strömungstrennelemente 27 in der einen Trennebene 29 unterschiedlich ausgeführt sind zu den Strömungstrennelementen 27 der anderen Trennebene 29. Beispielsweise können die Strömungstrennelemente 27 der oberen Trennebene 29 eine gröbere Abscheidung quasi als Vorreinigung und die darunterliegenden Strömungstrennelemente 27 eine feinere Abscheidung ermöglichen.

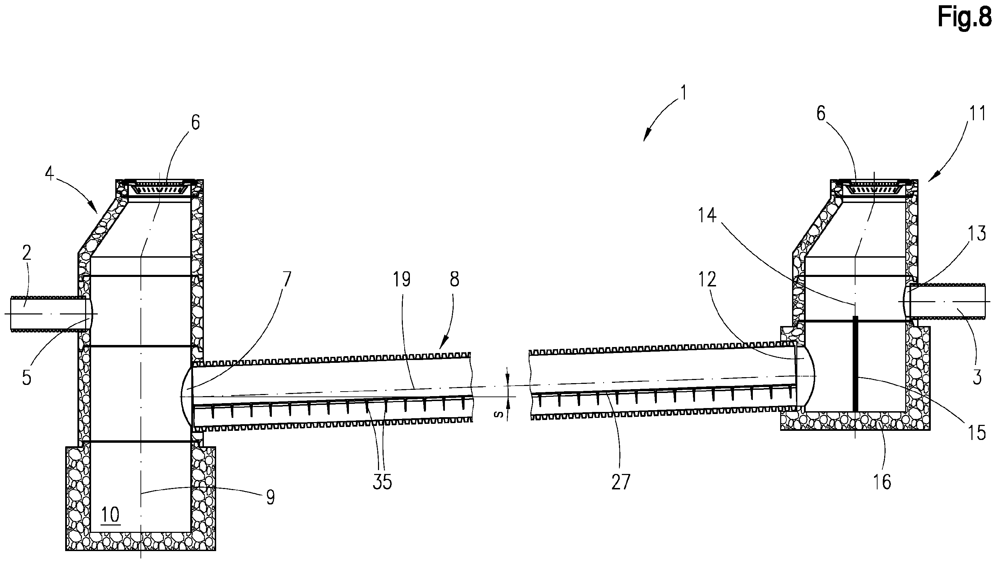

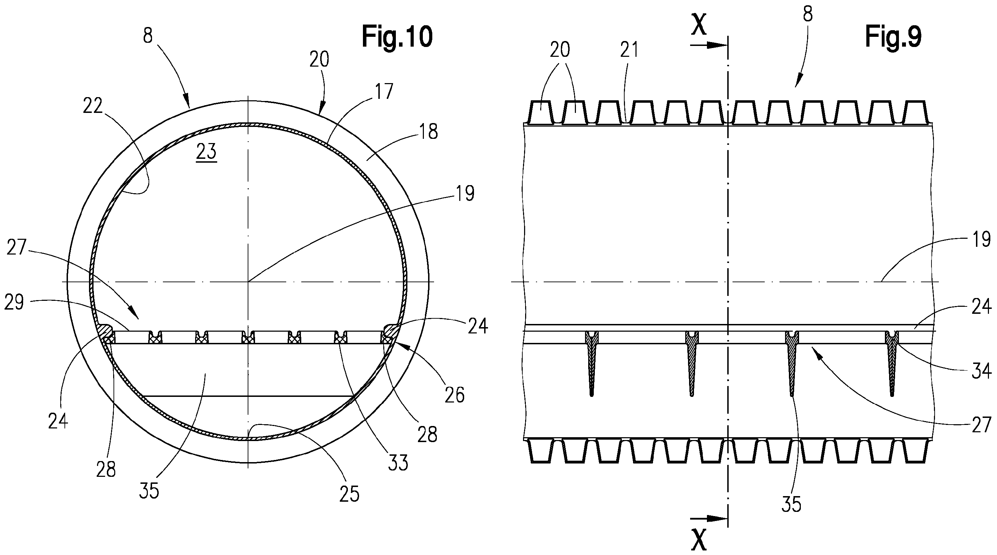

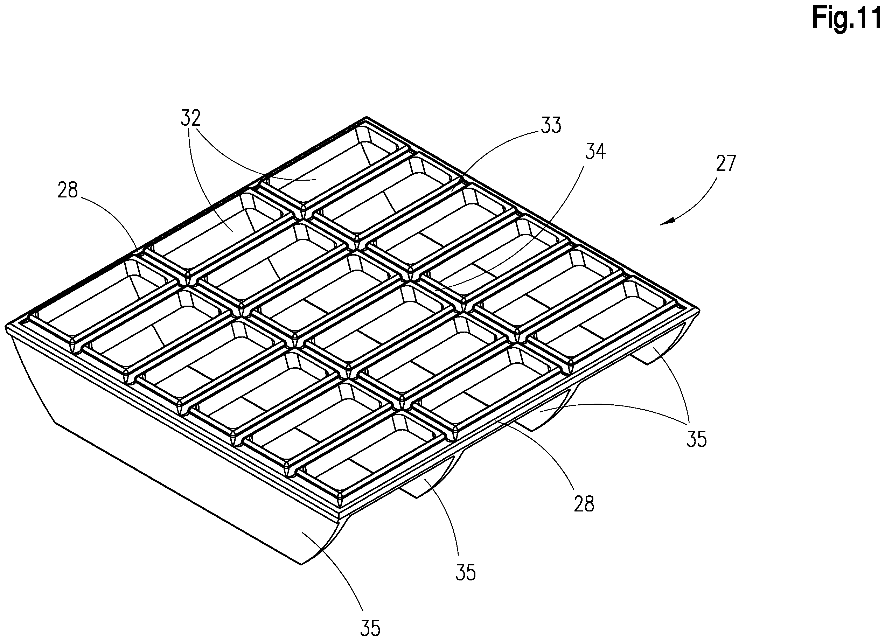

Eine in Fig. 8 bis 11 gezeigte Ausführung einer Rohrsedimentationsanlage 1 unterscheidet sich von der in Fig. 1 bis 4 im Wesentlichen dadurch, dass die Strömungstrennelemente 27 jeweils mehrere Strömungshinderniselemente 35 aufweisen. Die Strömungshinderniselemente 35 sind jeweils lamellenartig ausgeführt und insbesondere einteilig an der Unterseite der Strömungstrennelemente 27 angeformt. Die Strömungshinderniselemente 35 sind konisch verjüngend ausgeführt. Die Strömungshinderniselemente 35 erstrecken sich in den Sedimentationsraum 31.

Es hat sich gezeigt, dass die Strömungshinderniselemente 35 eine Rückströmung begünstigen, so dass Schwebstoffrückstände in vorteilhafter Weise aus dem Sedimentationsraum 31 in den Schmutzfang 10 des Zulaufschachts 4 gefördert werden.

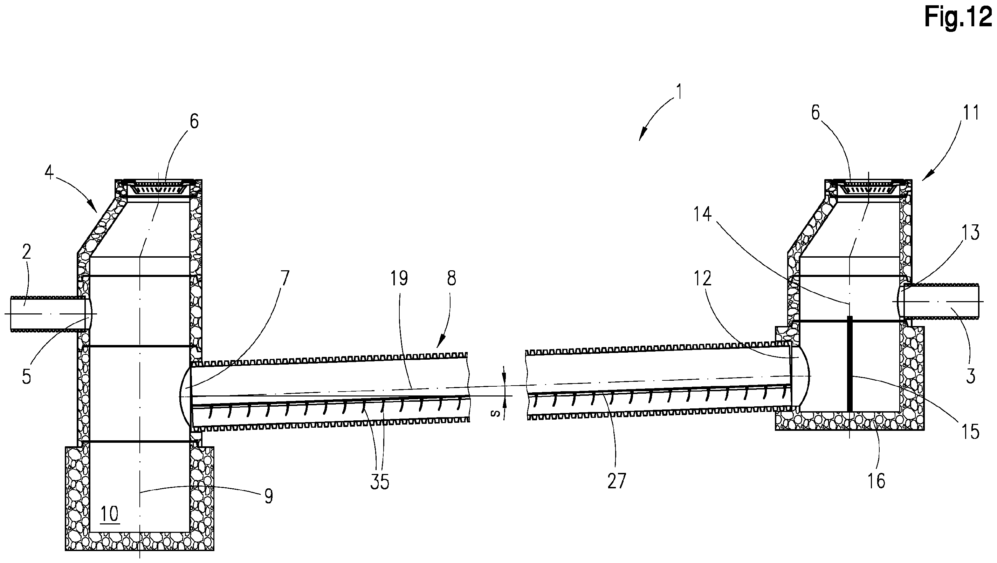

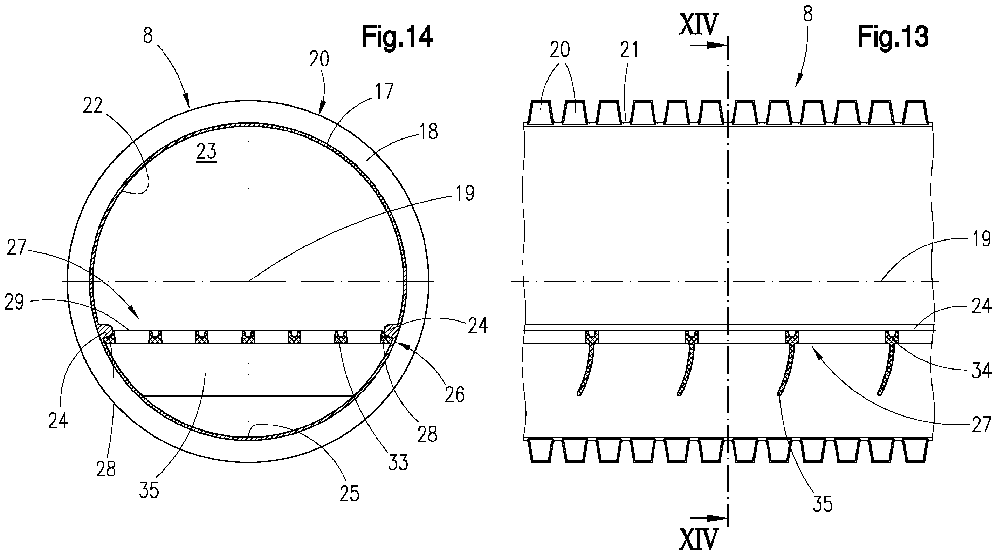

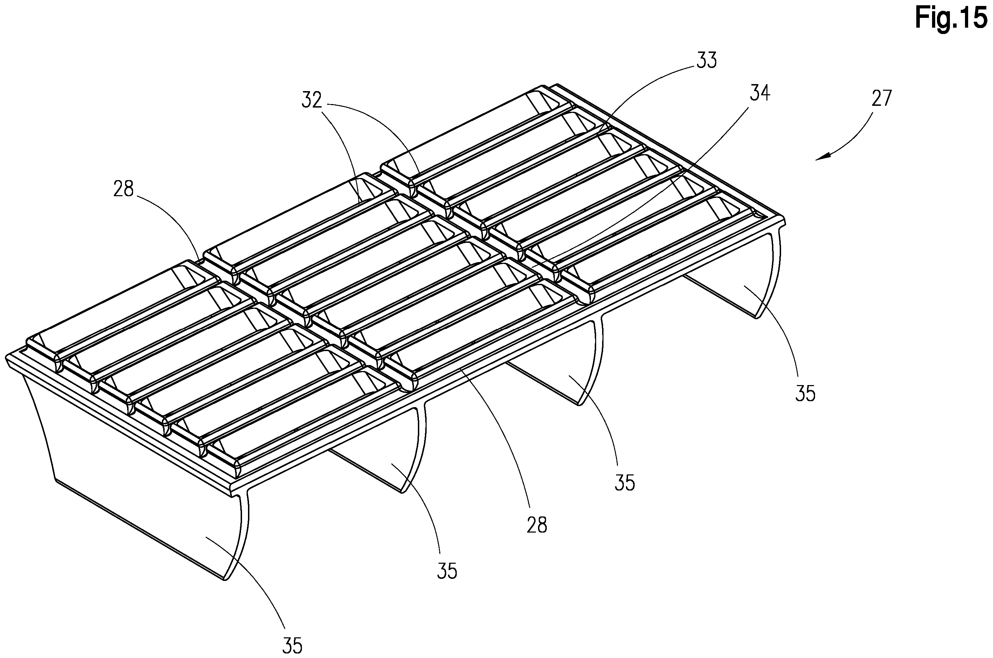

Eine in Fig. 12 bis 15 gezeigte Rohrsedimentationsanlage 1 entspricht im Wesentlichen der gemäß dem vorherigen Ausführungsbeispiel. Ein wesentlicher Unterschied besteht darin, dass die Strömungshinderniselemente 35 gekrümmt ausgeführt sind. Insbesondere weisen sie eine dem Zulaufschacht 4 zugewandte konkave Krümmung auf. Alternativ oder zusätzlich ist es möglich, dass die Strömungshinderniselemente 35 geneigt angeordnet sind.

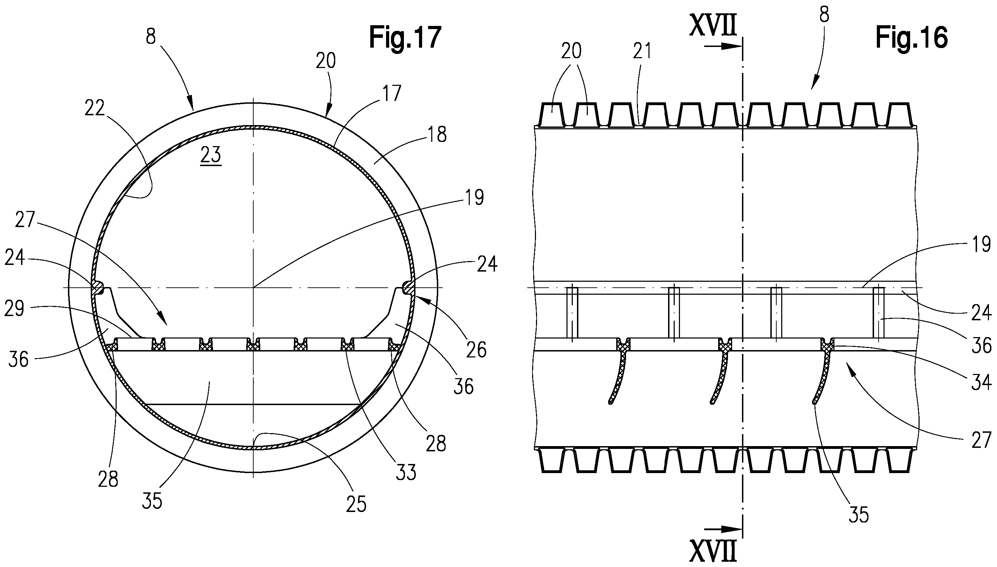

Ein in Fig. 16 und 17 gezeigtes weiteres Ausführungsbeispiel eines Sedimentationsrohrs 8 unterscheidet von dem vorherigen Ausführungsbeispiel dadurch, dass die Führungselemente 24 bezüglich der Rohrlängsachse 19 diametral gegenüberliegend zueinander angeordnet sind. Damit dennoch das Strömungstrennelement 27 mit den gekrümmten Strömungshinderniselemente 35 genutzt werden kann, sind Haltestege 36 vorhanden, die die Strömungstrennelemente 27 an ihrer Position im Innenrohr 17 halten. Die Haltestege 36 bilden vertikale Abstandshalter zwischen den Strömungstrennelementen 27 und den Führungselementen 24.

Die Haltestege 36 sind insbesondere einteilig an dem Strömungstrennelement 27 angeformt. Der Gesamtherstellungsaufwand für das Sedimentationsrohr 8 dieses Ausführungsbeispiels ist reduziert.

Die Haltestege 36 ermöglichen eine flexible Anpassung der Strömungstrennelemente 27 an der Rohrinnenseite 22. Fertigungstoleranzen bei der Rohrproduktion, die sich insbesondere am Innendurchmesser $d_i$ auswirken, können unkompliziert ausgeglichen werden. Die Montage der Strömungstrennelemente 27 im Sedimentationsrohr 8 und insbesondere deren Fixierung an der Rohrinnenseite 22 ist vereinfacht.

Mittels der Haltestege 36 ist es möglich, die Strömungstrennelemente 27 mit einer mechanischen Vorspannung an die Rohrinnenwand 22 zu drücken. Die Anordnung des Strömungstrennelements 27 mittels der Haltestege 36 ist verbessert. Die Haltestege 36 sind, insbesondere in einer Richtung radial zur Rohrlängsachse 19, elastisch deformierbar. Insbesondere ermöglichen es die Haltestege 36, in Umfangsrichtung bezüglich der Rohrlängsachse 19 gegensätzlich orientierte Vorspannkräfte auf das Strömungstrennelement 27 auszuüben. Das Strömungstrennelement 27 wird zuverlässig gegen die Rohrinnenseite 22 gedrückt. Ein unbeabsichtigtes Lageverändern des Strömungstrennelements 27 in dem Sedimentationsrohr 8 ist verhindert.

Bei dem gezeigten Ausführungsbeispiel ist das Strömungstrennelement 27 an der Rohrinnenseite 22 aufgelegt und mittels der Haltestege 36 gegen ein unbeabsichtigtes Abheben an den Führungselementen 24 gehalten.

Das erfindungsgemäße Sedimentationsrohr 8 gewährleistet eine unkomplizierte und unaufwändige Anbringung der Strömungstrennelemente 27.

**Patentansprüche**

1.  Sedimentationsrohr mit

    a. einer Rohrlängsachse (19),
    b. einem von einer Rohrrinnenseite (22) begrenzten Rohrrinnenraum (23),
    c. mindestens einem Führungselement (24), das an der Rohrinnenseite (22) integral ausgebildet ist,
    d. mindestens einem an dem mindestens einen Führungselement (24) gehaltenen Strömungstrennelement (27), das den Rohrinnenraum (22) in einen Strömungsraum (30) und einen Sedimentationsraum (31) trennt, wobei das mindestens eine Strömungstrennelement (27) mindestens eine Durchlassöffnung (32) aufweist zur Fluidverbindung zwischen dem Strömungsraum (30) und dem Sedimentationsraum (31), wobei die mindestens eine Durchlassöffnung (32) an dem Strömungstrennelement (27) innenliegend angeordnet ist.

2.  Sedimentationsrohr gemäß Anspruch 1, **dadurch gekennzeichnet, dass** das mindestens eine Führungselement (24) als Steg ausgeführt ist.

3.  Sedimentationsrohr gemäß einem der vorstehenden Ansprüche,
    **dadurch gekennzeichnet, dass** zwei Führungselemente (24) für das mindestens eine Strömungstrennelement (27) vorhanden sind.

4.  Sedimentationsrohr gemäß Anspruch 3, **dadurch gekennzeichnet, dass** das mindestens eine Strömungstrennelement (27) eine Trennebene (29) definiert, die insbesondere parallel zur Rohrlängsachse (19) orientiert ist.

5.  Sedimentationsrohr gemäß einem der vorstehenden Ansprüche,
    **dadurch gekennzeichnet, dass** das mindestens eine Strömungstrennelement (27) mindestens ein Strömungshinderniselement (35) aufweist.

6.  Sedimentationsrohr gemäß Anspruch 5, **dadurch gekennzeichnet, dass** das mindestens eine Strömungshinderniselement (35) gegenüber einer zur Rohrlängsachse (19) senkrecht orientierten Normalebene mit einem Neigungswinkel geneigt angeordnet und/oder gekrümmt ausgeführt ist.

7.  Sedimentationsrohr gemäß einem der vorstehenden Ansprüche, **gekennzeichnet durch** mehrere senkrecht zur Rohrlängsachse (19) orientierte Erhebungen (20) an einer Rohraußenseite, wobei das Sedimentationsrohr (8) insbesondere als Verbundrohr ausgeführt ist mit einem einen Innendurchmesser ($d_i$) aufweisenden Innenrohr (17) und mit einem mit dem Innenrohr (17) verschweißten Außenrohr (18), das einen Außendurchmesser ($d_a$) aufweist, wobei insbesondere gilt:

$$d_a \,/\, d_i \geq 1{,}08.$$

8.  Rohrsedimentationanlage umfassend

    a. einen Zulaufschacht (4),
    b. einen Ablaufschacht (11),
    c. eine den Zulaufschacht (4) und den Ablaufschacht (11) verbindende Sedimentationsstrecke, die mindestens ein Sedimentationsrohr (8) gemäß einem der vorstehenden Ansprüche umfasst.

9.  Rohrsedimentationanlage gemäß Anspruch 8, **dadurch gekennzeichnet, dass** das Sedimentationsrohr (8) mit der Rohrlängsachse (19) gegenüber der Horizontalen mit einem Steigungswinkel (s) angeordnet ist.

10. Rohrsedimentationanlage gemäß Anspruch 8 oder 9, **dadurch gekennzeichnet, dass** der Zulaufschacht (4) einen Schmutzfang (10) aufweist.

11. Rohrsedimentationanlage gemäß einem der Ansprüche 8 bis 10,
    **dadurch gekennzeichnet, dass** in dem Ablaufschacht (11) ein Stauelement (15) angeordnet ist.

Fig.1

**Fig.3**

**Fig.2**

EP 4 635 593 A1

Fig.4

**Fig.5**

**Fig.6**

Fig.7

EP 4 635 593 A1

Fig.8

EP 4 635 593 A1

Fig.9

Fig.10

Fig.11

EP 4 635 593 A1

Fig.12

Fig.13

Fig.14

Fig.15

EP 4 635 593 A1

**Fig.17**

**Fig.16**

EP 4 635 593 A1

Europäisches
Patentamt

European
Patent Office

Office européen
des brevets

## EUROPÄISCHER RECHERCHENBERICHT

Nummer der Anmeldung

EP 25 15 5143

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 2 823 109 B1 (FRAENKISCHE ROHRWERKE GEBR KIRCHNER GMBH & CO [DE]) 14. November 2018 (2018-11-14) * Absatz [0025]; Abbildungen 1,2 * - - - - - | 1-11 | INV. B01D17/02 B01D21/00 |
| A | EP 2 085 527 B1 (FRÄNKISCHE ROHRWERKE GEBR KIRCHNER GMBH & CO KG [DE]) 27. Januar 2016 (2016-01-27) * Absatz [0040]; Abbildung 1 * - - - - - | 1-11 | |

RECHERCHIERTE
SACHGEBIETE (IPC)

B01D
F17C
E03F

Der vorliegende Recherchenbericht wurde für alle Patentansprüche erstellt

| Recherchenort | Abschlußdatum der Recherche | Prüfer |
|---|---|---|
| München | 11. Juni 2025 | Flygare, Esa |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...............................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.** EP 25 15 5143

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-06-2025

| Im Recherchenbericht angeführtes Patentdokument | Datum der Veröffentlichung | Mitglied(er) der Patentfamilie | Datum der Veröffentlichung |
|---|---|---|---|
| EP 2823109 B1 | 14-11-2018 | DE 102012203408 A1 | 05-09-2013 |
| | | EP 2823109 A1 | 14-01-2015 |
| | | WO 2013131880 A1 | 12-09-2013 |
| EP 2085527 B1 | 27-01-2016 | DE 102008007227 A1 | 06-08-2009 |
| | | DK 2085527 T3 | 25-04-2016 |
| | | EP 2085527 A1 | 05-08-2009 |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102024203507
- DE 102004008960 A1
- EP 23163153 A
- DE 102023202512